# EUROPEAN PATENT SPECIFICATION

(11) **EP 3 141 466 B1**
(45) Date of publication and mention of the grant of the patent: **03.06.2020**
(21) Application number: 16185065.6
(22) Date of filing: 22.08.2016
(51) Int. Cl.: B62J 17/02, B62J 25/00

(54) **SADDLE-TYPE VEHICLE**
SATTELFAHRZEUG
VEHICULE DE TYPE A ENFOURCHER

(30) Priority: 11.09.2015 JP 2015179676
(43) Date of publication of application: 15.03.2017
(73) Proprietor: Honda Motor Co., Ltd., Minato-ku Tokyo 107-8556 (JP)
(72) Inventor: Ito, Satoshi, Saitama, 351-0193 (JP); Carbonara, Maurizio, 00143 Rome (IT)
(74) Representative: Beder, Jens

(56) References cited:
- DE-A1-102014 200 715
- US-A1- 2015 197 309

## Description

The present invention relates to a saddle-type vehicle.

There has been known as conventional art a saddle-type vehicle which is provided with longitudinally continuous main steps at positions between a handle and an occupant seat and outside in the widthwise direction of the vehicle.

Japanese Patent Laid-Open No. 1999-263265 discloses a vehicle according to prior art. DE102014200715A1 discloses a vehicle according to the preamble of claim 1.

In recent years, saddle-type vehicles have been finding use in various applications including a wide variety of types from urban scooter-type commuters to off-road vehicles capable of running over rough terrain. Under the circumstances, there is a demand for saddle-type vehicles that are able to travel on different places from urban roads to rough terrain comfortably all by themselves. However, it has been difficult for the conventional main steps described above to meet such a demand.

The present invention has been made in view of the above difficulty. It is an object of the present invention to provide a saddle-type vehicle having a step structure which makes it possible for the vehicle to travel comfortably on a wide variety of road conditions from urban roads to rough terrain.

To achieve the above object, there is provided in accordance with the present invention a saddle-type vehicle having a main step provided longitudinally continuously at a position disposed outwardly in the widthwise direction of the vehicle between a bar handle and an occupant seat, the saddle-type vehicle including a plate-like step that is separate from the main step and provided at a position forward of the main step, the plate-like step being provided openably and closably such that the plate-like step has a portion that is positioned outwardly in the widthwise direction of the vehicle when the plate-like step is open and that is positioned upwardly when the plate-like step is closed; the plate-like step is arranged so as to fill a space i) that is concave inwardly in the widthwise direction of the saddle-type vehicle and ii) that is between i) front end portions (83a) of a front foot rest (83) of the main step and ii) lower ends (51b) of a laterally bulging portion (51a) of a vehicle body cover of the saddle-type vehicle.

According to the present invention, the plate-like step that is provided separately from the main step at the position forward of the main step is provided openably and closably such that the plate-like step has the portion that is positioned outwardly in the widthwise direction of the vehicle when the plate-like step is open and that is positioned upwardly when the plate-like step is closed; the plate-like step is arranged so as to fill a space i) that is concave inwardly in the widthwise direction of the saddle-type vehicle and ii) that is between i) front end portions (83a) of a front foot rest (83) of the main step and ii) lower ends (51b) of a laterally bulging portion (51a) of a vehicle body cover of the saddle-type vehicle. Thus, when the saddle-type vehicle travels on ordinary roads such as urban roads or the like, the driver can drive the saddle-type vehicle in a relaxed manner while the plate-like step at the position forward of the longitudinally continuous main step is being open and the foot is being placed on the plate-like step. Further, the plate-like step which is open can protect the foot of the driver from splashing mud or the like. On the other hand, when the saddle-type vehicle travels on roads such as rough terrain or the like, the plate-like step is closed to reduce the width of a front portion of the vehicle body, allowing the saddle-type vehicle to travel easily on rough terrain or the like. Therefore, the saddle-type can travel comfortably on a wide variety of road conditions from urban roads to rough terrain.

Furthermore, the present invention is characterized in that the saddle-type vehicle further includes a sub-step that is separate from the main step and provided at a position rearward of the main step.

According to the present invention, since the sub-step that is separate from the main step and is provided at the position rearward of the main step, the occupant can place its foot on the sub-step at the position rearward of the main step depending on the situation, resulting in a higher degree of freedom for the riding posture of the occupant.

Furthermore, the present invention is characterized in that the saddle-type vehicle further includes a passenger step provided at a position rearward of the sub-step.

According to the present invention, since the passenger step is provided at the position rearward of the sub-step, even when the occupant uses the sub-step, the passenger can use the passenger step.

Furthermore, the present invention is characterized in that the saddle-type vehicle further includes a front fender covering a front wheel from above, the plate-like step being inclined such that a front end thereof is higher than a rear end thereof and overlaps a rear end portion of the front fender as viewed in side elevation.

According to the present invention, the plate-like step is inclined such that the front end thereof is higher than the rear end thereof and overlaps the rear end portion of the front fender as viewed in side elevation. This allows a space used by the driver for putting its foot on the plate-like step to be ensured up to a rear end portion of the front fender, thereby increasing the comfort of the driver, and also allows the foot to be appropriately held on the plate-like step that is inclined to make the front end thereof higher. As the plate-like step is inclined, the plate-like step is made compact in terms of longitudinal length.

Furthermore, the present invention is characterized in that the sub-step has an upper face disposed at the same vertical position as the lowest face of a foot rest face of the main step.

According to the present invention, since the upper face of the sub-step is at the same vertical position as the lowest face of the foot rest face of the main step, it is easy for the driver to switch the foot position between the main step and the sub-step.

Furthermore, the present invention is characterized in that the main step has a bent portion as viewed in side elevation, the plate-like step is provided forward of the bent portion along the main step, and the sub-step is provided downward of an extension line that extends rearwardly from the bent portion along a foot rest face of the main step.

According to the present invention, the main step has the bent portion as viewed in side elevation, the plate-like step is provided forward of the bent portion along the main step, and the sub-step is provided downward of the extension line that extends rearwardly from the bent portion along the foot rest face of the main step. Therefore, since the plate-like step is provided forward of the bent portion along the main step, the driver can easily move the foot from the main step to the plate-like step, and the plate-like step and the main step are regarded as integrally combined together for a better design. As the sub-step is provided downward of the rearward extension line of the foot rest face of the main step, the driver can easily switch the foot position from the main step to the sub-step.

Furthermore, the present invention is characterized in that the plate-like step is joined by a hinge and provided openably and closably.

According to the present invention, inasmuch as the plate-like step is joined by the hinge and provided openably and closably, the plate-like step is openable and closable by a simple structure.

### [Effects of the Invention]

The driver of the saddle-type vehicle according to the present invention can drive the saddle-type vehicle in a relaxed manner with its foot placed on the plate-like step which is open at the position forward of the main step, in addition, the plate-like step which is open protects the foot from splashing mud or the like. When the plate-like step is closed, the width of a front portion of the vehicle body is reduced to allow the saddle-type vehicle to travel easily on rough terrain or the like. Therefore, the saddle-type vehicle can travel comfortably on a wide variety of road conditions from urban roads to rough terrain.

The occupant can place its foot on the sub-step at the position rearward of the main step depending on the situation, resulting in a higher degree of freedom for the riding posture of the occupant.

Even when the sub-step is used, the passenger can use the passenger step.

Further, ensuring a space used by the driver to place the foot on the plate-like step increases the comfort of the driver, while allowing the driver's foot to be appropriately held on the plate-like step that is inclined. Furthermore, the plate-like step is made compact in terms of longitudinal length.

Still further, the driver can easily switch the foot position between the main step and the sub-step.

Still further, the driver can also easily move the foot from the main step to the plate-like step, and the plate-like step and the main step are regarded as integrally combined together for a better design.

Still further, the hinge allows the plate-like step to be openable and closable with a simple structure.

### Brief Description of the Drawings

FIG. 1 is a right side-elevational view of a motorcycle according to an embodiment of the present invention.
FIG. 2 is a plan view of the motorcycle as viewed from above.
FIG. 3 is a front elevational view of a front portion of the motorcycle, depicting a section taken along the axes of front fork tubes of a steering system as viewed horizontally from front.
FIG. 4 is an enlarged right side-elevational view of a peripheral region of a right main step.
FIG. 5 is a set of views depicting the manner in which a plate-like step is opened and closed as viewed from a front lateral side, FIG. 5(a) depicting the plate-like step as closed and FIG. 5(b) depicting the plate-like step as open.
FIG. 6 is a set of views depicting the manner in which the plate-like step is opened and closed as viewed from a rear lateral side, FIG. 6(a) depicting the plate-like step as closed and FIG. 6(b) depicting the plate-like step as open.
FIG. 7 is a right side-elevational view of the motorcycle, depicting the manner in which feet are placed on a main step and a sub-step.

An embodiment of the present invention will be described below with reference to the drawings. In the description that follows, descriptions indicating directions such as forward, rearward, leftward, rightward, upward, and downward shall be regarded as identical to the directions with respect to a vehicle body unless specified otherwise. In the drawings, the reference characters "FR" denote a forward direction of the vehicle body, "UP" an upward direction of the vehicle body, and "LH" a leftward direction of the vehicle body.

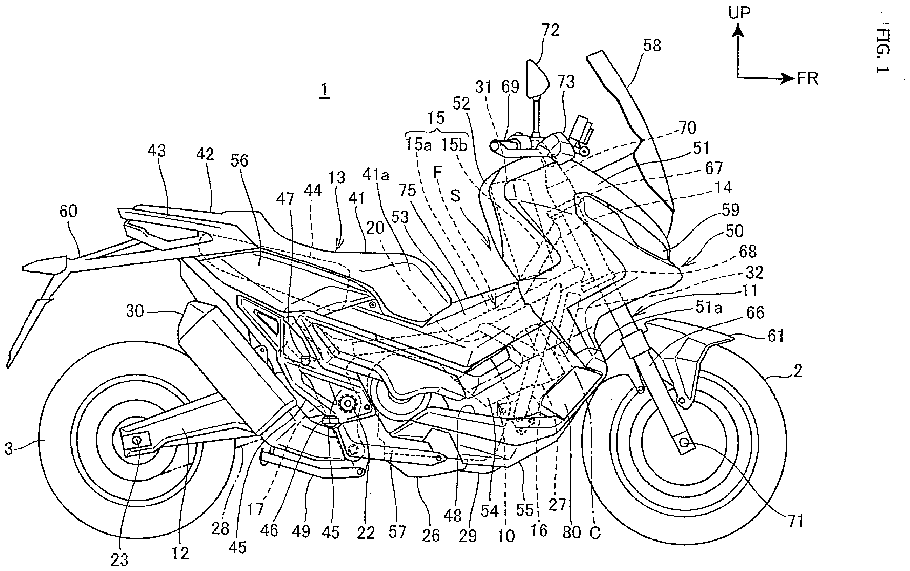

FIG. 1 is a right side-elevational view of a motorcycle according to the embodiment of the present invention. In the right side-elevational views described below, there are illustrated only those on the right side of components provided as pairs of left and right components.

The motorcycle 1 is a vehicle wherein an engine 10 as a power unit is supported on a vehicle body frame F, a steering system 11 on which a front wheel 2 is steerably supported is steerably supported on a front end of the vehicle body frame F, and a swing arm 12 on which a rear wheel 3 is supported is provided on a rear portion of the vehicle body frame F. The motorcycle 1 is a saddle-type vehicle wherein an occupant seat 13 on which occupants will be seated astride is provided on an upper area of the rear portion of the vehicle body frame F.

The vehicle body frame F includes a head pipe 14 provided on the front end thereof, a pair of left and right main frames 15 extending rearwardly and downwardly from a rear portion of the head pipe 14, a pair of left and right down frames 16 extending rearwardly and downwardly from front end portions of the main frames 15, a pair of left and right pivot frames 17 extending downwardly from the rear ends of the main frames 15, and a pair of left and right rear frames (not shown) extending rearwardly and upwardly from upper portions of the pivot frames 17 to rear end portions of the vehicle.

Each main frame 15 includes a main frame body 15a extending rearwardly and downwardly at a relatively small gradient from a lower portion of the head pipe 14, and a stiffener frame portion 15b interconnecting an upper portion of the head pipe 14 and a front portion of the main frame body 15a. The vehicle body frame F also includes a pair of left and right joint frames 20 interconnecting intermediate portions of the main frame bodies 15a and the down frames 16.

The swing arm 12 has a front end supported on a pivot shaft 22 that interconnects the left and right pivot frames 17 in the widthwise direction of the vehicle, so that the swing arm 12 will swing vertically about the pivot shaft 22. The rear wheel 3 is supported on a rear wheel axle 23 that is inserted in a rear end portion of the swing arm 12.

The swing arm 12 is coupled to a rear portion of the vehicle body frame F by a rear suspension (not shown).

The engine 10 is mounted in place so that it is suspended from the vehicle body frame F in front of the pivot frames 17.

The engine 10 includes a crankcase 26 supporting a crankshaft (not shown) extending in the widthwise direction of the vehicle, and a cylinder block 27 extending forwardly and upwardly from a front portion of the crankcase 26. The crankcase 26 is positioned below rear portions of the main frames 15. The cylinder block 27 extends forwardly and upwardly along the main frames 15 and has a front portion positioned between the left and right down frames 16 and between the left and right joint frames 20.

The cylinder block 27 of the engine 10 has its cylinder axis C inclined forwardly, more closely to a horizontal line to a vertical line, with a space being created above the engine 10.

The output power of the engine 10 is transmitted to the rear wheel 3 by a chain 28 that is trained between the output shaft (not shown) of the engine 10 and the rear wheel 3.

The engine 10 has an exhaust pipe 29 that extends downwardly from the cylinder head of the cylinder block 27 and rearwardly beneath the engine 10 and that is connected to a muffler 30 located on a right side of the swing arm 12.

An air cleaner box 31 for purifying air to be supplied to the engine 10 is disposed upward of front portions of the main frames 15 and rearward of the head pipe 14. Air that has passed through the air cleaner box 31 is adjusted in flow rate by a throttle body (not shown), and flows to the cylinder head of the cylinder block 27. The engine 10 has a radiator 32 disposed downward of the head pipe 14 and forward of the cylinder block 27.

The occupant seat 13 includes, as an integral combination, a front seat 41 for the driver and a rear seat 42, higher than the front seat 41, for the passenger (fellow passenger).

The front seat 41 is disposed upward of the rear portions of the main frames 15 and of the pivot frames 17. The front seat 41 is positioned upward of a rear portion of the crankcase 26.

The rear seat 42 is disposed upward of rear portions of the rear frames referred to above. The rear seat 42 is positioned upward of a rear portion of the muffler 30 and upward of a front portion of the rear wheel 3. Grips 43 for being gripped by the passenger seated on the rear seat 42 are provided on left and right sides of the rear seat 42.

A fuel tank 44 is disposed downward of the front seat 41 and the rear seat 42.

A pair of left and right plate-like step holders 45 is provided on outer side surfaces of the pivot frames 17. The step holders 45 support a pair of left and right sub-steps 46 for the driver and a pair of left and right passenger sub-steps 47 for the passenger. A pair of left and right main steps 48 for the driver is provided forward and downward of the front seat 41.

A main stand 49 is coupled to lower portions of the pivot frames 17.

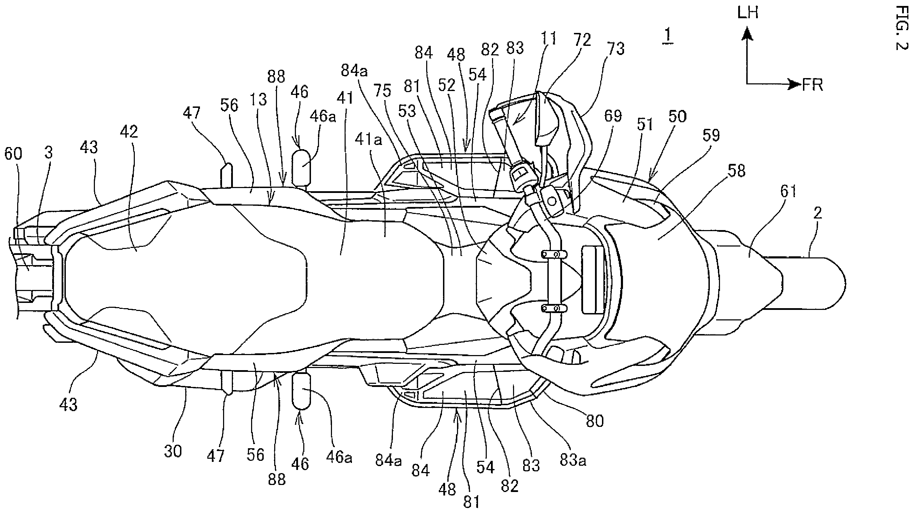

FIG. 2 is a plan view of the motorcycle 1 as viewed from above. In FIG. 2, the structure of a right end portion of a bar handle 69 to be described later is omitted from illustration.

As depicted in FIGS. 1 and 2, the motorcycle 1 has a vehicle body cover 50 covering the vehicle body thereof. The vehicle body cover 50 includes: a front cover 51 covering upper portions of the head pipe 14 and the steering system 11 from front and left and right sides thereof; a rear face cover 52 coupled to the rear edge of the front cover 51 and covering the upper portions of the head pipe 14 and the steering system 11 from rear sides thereof; a below-the-seat cover 53 covering the main frames 15 from above and left and right sides thereof in the rearward of a lower portion of the front cover 51; and a pair of left and right intermediate side face covers 54 covering rear portions of the engine 10 and the vehicle body frame F from sides thereof in the downward of the below-the-seat cover 53.

The vehicle body cover 50 also includes an under cover 55 covering the engine 10 from below, a pair of left and right rear covers 56 covering a lower portion of the occupant seat 13 from sides thereof in the rearward of the below-the-seat cover 53, and a pair of left and right frame covers 57 covering a rear lower portion of the engine 10 and lower portions of the pivot frames 17 from sides thereof.

A plate-like windscreen 58 that extends vertically is provided on a front portion of the front cover 51. A headlight 59 is provided on a front face of the front cover 51.

The motorcycle 1 includes a rear fender 60 covering the rear wheel 3 from above and a front fender 61 covering the front wheel 2 from above.

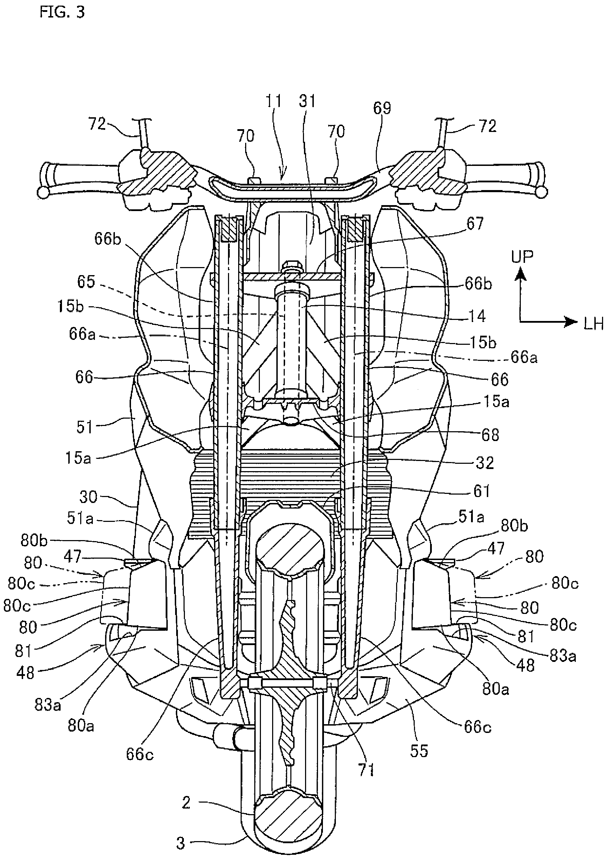

FIG. 3 is a front elevational view of a front portion of the motorcycle 1, depicting a section taken along the axes 66a of front fork tubes 66 of the steering system 11 as viewed horizontally from front.

As depicted in FIGS. 1 through 3, the steering system 11 includes: a steering shaft 65 (FIG. 3) angularly movably supported in the head pipe 14; a pair of left and right front fork tubes 66 that is disposed on the left and right sides of the front wheel 2 and supports the front wheel 2; a top bridge 67 that is fixed to the upper end of the steering shaft 65 and interconnects the left and right front fork tubes 66; and a bottom bridge 68 that is fixed to the lower end of the steering shaft 65 and interconnects the left and right front fork tubes 66. The steering system 11 further includes a bar handle 69 (handle) provided on and fixed to upper portions of the front fork tubes 66, and a pair of left and right handle holders 70 securing the bar handle 69 to the front fork tubes 66.

Each of the top bridge 67 and the bottom bridge 68 is in the form of a plate-like member extending in the widthwise direction of the vehicle, and has a shaft fixing hole defined centrally therein in the widthwise direction of the vehicle, with the steering shaft 65 being fixedly disposed in the shaft fixing hole, and a pair of fork supporting holes defined in the opposite ends thereof in the widthwise direction of the vehicle, with the front fork tubes 66 being inserted respectively in the fork supporting holes.

The top bridge 67 is secured to the upper end of the steering shaft 65 in the upward of the head pipe 14, and the bottom bridge 68 is secured to the lower end of the steering shaft 65 in the downward of the head pipe 14.

The axes 66a of the front fork tubes 66 are inclined rearwardly from the vertical direction by an angle commensurate with a caster angle set on the motorcycle 1.

Each of the front fork tubes 66 has an upper tube 66b supported on the top bridge 67 and the bottom bridge 68, and a lower tube 66c axially telescopically provided on the upper tube 66b.

The front wheel 2 is supported on a front wheel axle 71 extending between the lower ends of the lower tubes 66c.

On the bar handle 69, there are provided a pair of left and right rearview mirrors 72 and a pair of left and right knuckle guards 73.

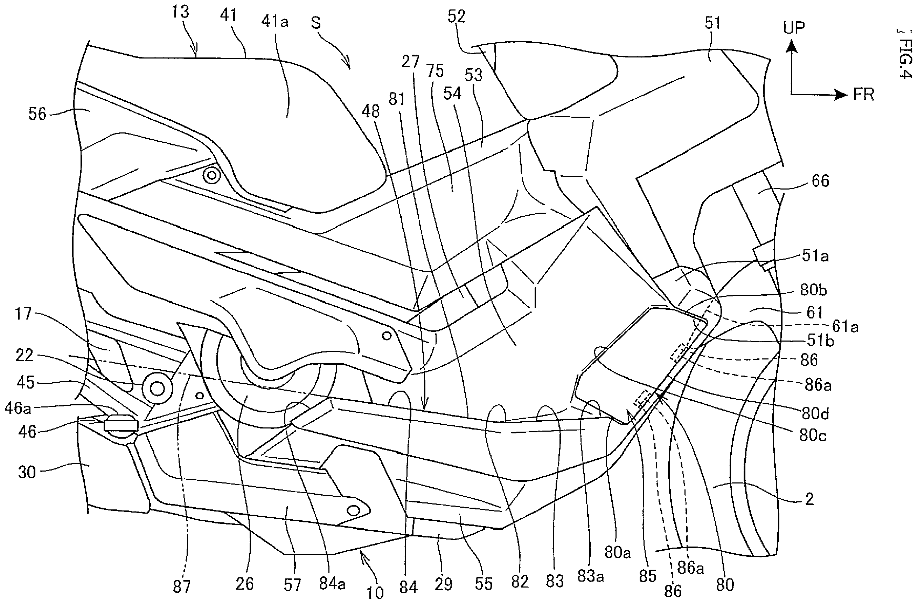

FIG. 4 is an enlarged right side-elevational view of a peripheral region of the right main step 48. Step structures for the occupants will be described below. Since the step structures are of bilateral symmetry, the step structure on the right side of the vehicle will be described in detail below, and a detailed description of the step structure on the left side of the vehicle will be omitted below.

As depicted in FIGS. 1, 2, and 4, a front portion of the below-the-seat cover 53 and front portions of the intermediate side face covers 54 are vertically combined together into a tunnel-shaped central tunnel 75 having an inverted U-shaped cross section. A front portion of the vehicle body frame F and the cylinder block 27 are housed in the central tunnel 75.

An upper face of the central tunnel 75 is disposed at a position lower than an upper face of the front seat 41, creating a concaved straddling space S between a front face of the front seat 41 and the rear face cover 52. When the occupant to be seated on the front seat 41 gets on or off the motorcycle 1, the occupant can move its leg through the straddling space S and hence can easily get on or off the motorcycle 1.

As depicted in FIG. 2, the front seat 41 has a front portion 41a narrower in the widthwise direction thereof than its rear portion. The central tunnel 75 has a lower portion wider than the front portion 41a in the widthwise direction of the vehicle.

The motorcycle 1 has, as steps for the driver seated on the front seat 41, the main steps 48, the sub-steps 46, and a pair of left and right plate-like steps 80 provided openably and closably at positions forward of the main steps 48.

The main steps 48 are positioned between the bar handle 69 and the front seat 41 in the longitudinal direction of the vehicle, and are positioned more outwardly than the front seat 41 in the widthwise direction of the vehicle. The main steps 48 are formed as floors extending continuously in the longitudinal direction of the vehicle.

Moreover, the main steps 48 are formed as floors projecting outwardly in the widthwise direction of the vehicle from left and right lower portions of the central tunnel 75.

More specifically, the main steps 48 extend forwardly from a position below the front portion 41a of the front seat 41 beyond the position of the bar handle 69 toward a position in the vicinity of the rear end of the front wheel 2, as viewed in side elevation. The main steps 48 are made longer than the overall length of the feet of a driver having a general body type such that the feet of the driver will be placed in their entirety on the main steps 48 in the longitudinal direction of the vehicle.

The main steps 48 have upper surfaces serving as foot rest faces 81 for placing the feet of the driver thereon.

The foot rest faces 81 lie substantially horizontally in the widthwise direction of the vehicle, but are inclined in the longitudinal direction of the vehicle. The foot rest faces 81 include in their front portions bent portions 82 that are bent so as to be in a downward convex. The foot rest faces 81 are disposed in such a vertical position that it is easy for the driver to place thereon its legs extending forwardly and downwardly from the front seat 41. According to the present embodiment, the foot rest faces 81 lie in positions higher than the front wheel axle 71 and lower than the front fender 61. The front fender 61 is a plate-like member extending arcuately along an upper portion of the front wheel 2.

The foot rest faces 81 include front foot rests 83 extending forwardly and slightly upwardly from the bent portions 82 as viewed in side elevation, and rear foot rests 84 extending obliquely rearwardly and upwardly from the bent portions 82 as viewed in side elevation. The rear foot rests 84 have on their rear ends rear-down portions 84a extending rearwardly and downwardly as viewed in side elevation.

The front foot rests 83 are positioned downward of the bar handle 69 as viewed in side elevation. The front foot rests 83 have front end portions 83a inclined so that their outer edges are positioned progressively more inwardly in the widthwise direction of the vehicle toward front side thereof, that is, the front end portions 83a become narrower toward the front side thereof, as viewed in plan.

The rear foot rests 84 extend from the bent portions 82 to positions below the front portion 41a of the front seat 41, and are made longer than the front foot rests 83 in the longitudinal direction.

The rear-down portions 84a of the rear foot rests 84 are inclined so that their outer edges are positioned progressively more inwardly in the widthwise direction of the vehicle toward rear side thereof, that is, the rear-down portions 84a become narrower toward the rear side thereof, as viewed in plan.

The front cover 51 has in its left and right lower end portions laterally bulging portions 51a bulging more outwardly in the widthwise direction of the vehicle than side face portions of the central tunnel 75 at front positions of the central tunnel 75. The laterally bulging portions 51a have rear edges inclined rearwardly and upwardly as viewed in side elevation.

As viewed in side elevation, the laterally bulging portions 51a have lower ends 51b overlapping the front fender 61, and the front wheel 2 has a rear upper portion passing between the laterally bulging portions 51a. The lower ends 51b of the laterally bulging portions 51a are positioned forward and upward of the front end portions 83a of the front foot rests 83.

As the laterally bulging portions 51a and the main steps 48 bulge in the widthwise direction of the vehicle, spaces 85 (FIG. 4) that are concave inwardly in the widthwise direction of the vehicle are defined between the lower ends 51b of the laterally bulging portions 51a and the front end portions 83a of the front foot rests 83.

The plate-like steps 80 are disposed in the spaces 85 so as to fill the spaces 85.

The plate-like steps 80 are substantially rectangular plate members that are longer in the vertical direction than in the widthwise direction of the vehicle. As described above, the plate-like steps 80 are openable and closable, and are depicted as closed in FIGS. 1, 3, and 4.

The plate-like steps 80 are disposed so as to be inclined forwardly upwardly as viewed in side elevation when they are closed, in a manner to join the front edges of the front end portions 83a of the front foot rests 83 and the lower edges of the lower ends 51b of the laterally bulging portions 51a. Specifically, the plate-like steps 80 have step rear ends 80a contiguous to the front end portions 83a of the front foot rests 83 and step front ends 80b contiguous to the lower ends 51b of the laterally bulging portions 51a. The plate-like steps 80 are inclined such that the step front ends 80b are higher than the step rear ends 80a.

The front end portion 83a of the front foot rest 83, the plate-like step 80, and the lower end 51b of the laterally bulging portion 51a are successively disposed so that they look as an integral combination. The step rear ends 80a also serve as the lower ends of the plate-like steps 80, and the step front ends 80b as the upper ends of the plate-like steps 80.

The plate-like steps 80 have outer edges 80c (portions positioned outwardly in the widthwise direction of the vehicle) exposable outwardly in the widthwise direction of the vehicle and inner edges 80d positioned on the side of the central tunnel 75. The plate-like steps 80 are mounted on the vehicle body by hinge members 86 (hinges) joined to the inner edges 80d. The hinge members 86 are attached to the vehicle body cover 50 or a stay or the like supported on the vehicle body frame F.

The hinge members 86 have angularly movable shafts 86a extending along the direction in which the plate-like steps 80 are inclined forwardly upwardly.

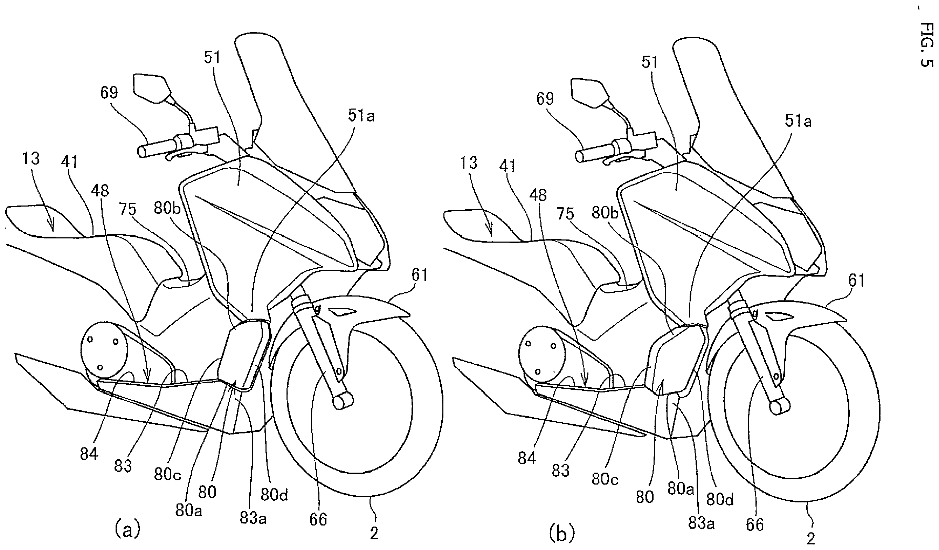

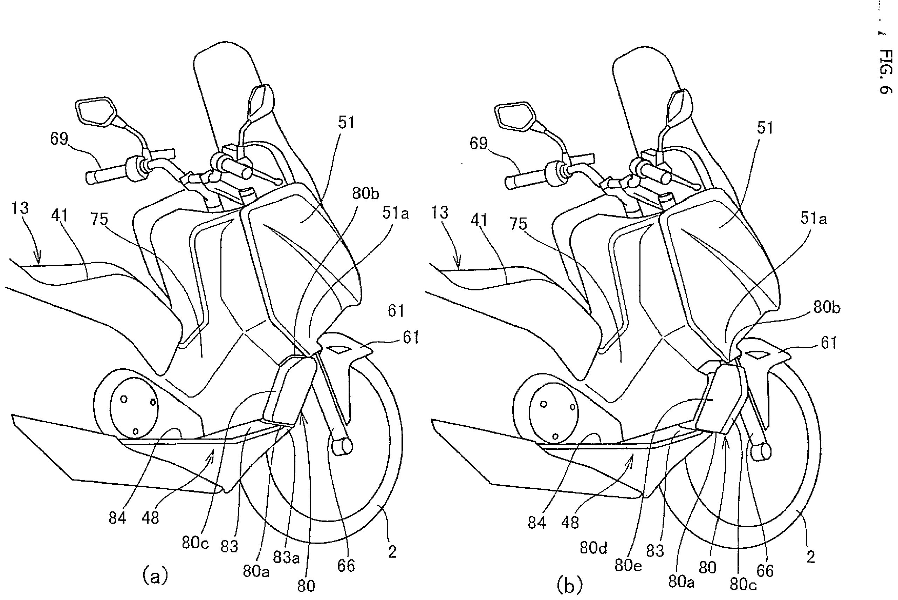

FIG. 5 is a set of views depicting the manner in which the plate-like steps 80 are opened and closed as viewed from a front lateral side, FIG. 5(a) depicting the plate-like steps 80 as closed and FIG. 5(b) depicting the plate-like steps 80 as open. FIG. 6 is a set of views depicting the manner in which the plate-like steps 80 are opened and closed as viewed from a rear lateral side, FIG. 6(a) depicting the plate-like steps 80 as closed and FIG. 6(b) depicting the plate-like steps 80 as open. In FIG. 3, the plate-like steps 80 are indicated as closed by the imaginary lines.

As depicted in FIGS. 3 through 6, the plate-like steps 80 can be opened and closed when they are angularly moved forwardly and rearwardly about the angularly movable shafts 86a (FIG. 4) of the hinge members 86. When the plate-like steps 80 are open, their upper faces which extend forwardly upwardly serve as front end foot rests 80e (FIG. 6(b)) for placing the feet of the driver thereon.

When the plate-like steps 80 are open, they have been angularly moved forwardly from their closed position, with the faces of the front end foot rests 80e being oriented straight outwardly in the widthwise direction of the vehicle (perpendicularly to the sheet of FIG. 4). In other words, when the plate-like steps 80 are open, they extend forwardly upwardly in the longitudinal direction of the vehicle, but lie substantially horizontally in the widthwise direction of the vehicle.

When the plate-like steps 80 are closed, they have been angularly moved rearwardly from their open position about the angularly movable shafts 86a, with the faces of the front end foot rests 80e being oriented outwardly in the widthwise direction of the vehicle and obliquely rearward.

When the plate-like steps 80 are closed, the outer edges 80c are in positions equivalent to the outer edges of the front end portions 83a of the front foot rests 83 in the widthwise direction of the vehicle. When the plate-like steps 80 are open, the outer edges 80c are moved forwardly and outwardly in the widthwise direction of the vehicle. The plate-like steps 80 are provided openably and closably such that the outer edges 80c which are positioned outwardly in the widthwise direction of the vehicle when the plate-like steps 80 are open are positioned upwardly when the plate-like steps 80 are closed. With this arrangement, when the plate-like steps 80 are open, the front end foot rests 80e become wider in the widthwise direction of the vehicle and directly confront the feet of the driver, making it easy for the driver to place the feet on the front end foot rests 80e. When the plate-like steps 80 are closed, the plate-like steps 80 are made compact in the widthwise direction of the vehicle.

As depicted in FIGS. 4 and 2, the sub-steps 46 are provided separately from the main steps 48 at positions spaced rearwardly from the main steps 48.

The sub-steps 46 are smaller in longitudinal width than the main steps 48. According to the present embodiment, the longitudinal widths of the sub-steps 46 are shorter than the overall length of the feet of a driver having a general body type. The positions of the sub-steps 46 in the widthwise direction of the vehicle overlap the positions of the main steps 48 in the widthwise direction of the vehicle.

The sub-steps 46 are directly coupled to the pivot frames 17 by the step holders 45.

The sub-steps 46 are disposed rearward and downward of the pivot shaft 22. Specifically, the sub-steps 46 have upper faces 46a disposed at the same vertical positions as the faces of the bent portions 82 which are the lowest faces of the foot rest faces 81 of the main steps 48, and disposed at the same vertical positions as the rear ends of the rear-down portions 84a of the main steps 48.

The sub-steps 46 are provided downward of an imaginary extension line 87 that extends from the bent portions 82 along the foot rest faces 81 of the main steps 48.

As depicted in FIGS. 1 and 2, the passenger steps 47 are provided rearward and upward of the sub-steps 46. The passenger steps 47, which are rod-like steps, can be brought into a working state wherein the passenger can place its feet on the foot rests that extend outwardly in the widthwise direction of the vehicle and a stored state wherein the passenger steps 47 are folded back into storage. Since the passenger steps 47 are provided rearward and upward of the sub-steps 46, the feet of the passenger who uses the passenger steps 47 are prevented from interfering with the feet of the driver who uses the sub-steps 46. The passenger steps 47 may be of a plate-like shape that provides wider foot rests than a rod-like shape, for increasing the comfort of the passenger.

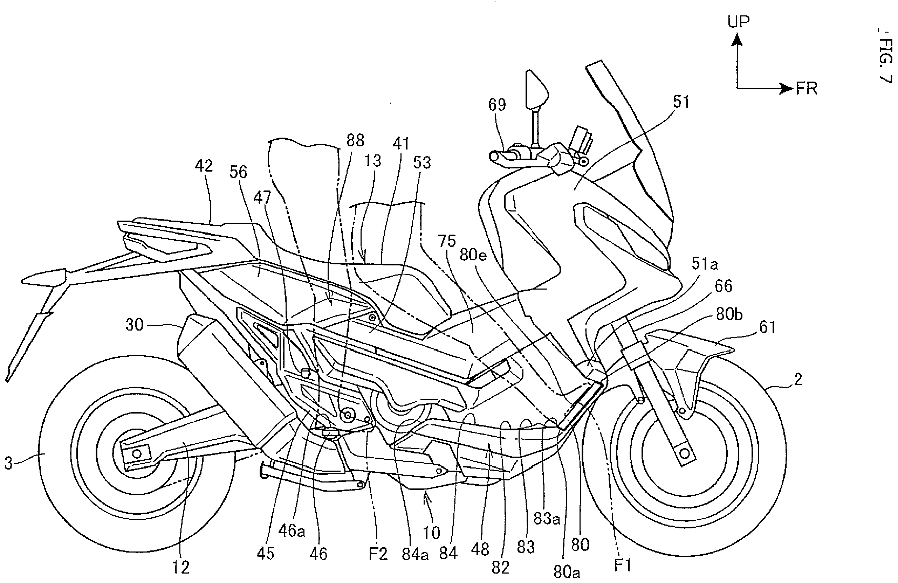

FIG. 7 is a right side-elevational view of the motorcycle, depicting the manner in which the feet are placed on the main steps 48 and the sub-steps 46.

A method of using the main steps 48, the plate-like steps 80, and the sub-steps 46 will be described below with reference to FIG. 7.

When the motorcycle travels on ordinary roads such as urban roads or the like, the driver on the front seat 41 can drive the motorcycle in a relaxed manner with the legs extended forwardly and downwardly while the feet F1 being placed on the front end foot rests 80e of the plate-like steps 80 that are open. Since the front end foot rests 80e extend forwardly and upwardly, the driver can drive the motorcycle while in a natural posture with its tiptoes directed forwardly upwardly, and also the plate-like steps 80 are made compact in terms of their longitudinal length. The plate-like steps 80 are disposed forwardly such that the step front ends 80b overlap a fender rear end portion 61a of the front fender 61 as viewed in side elevation. This allows a space used by the driver for putting its feet on the plate-like steps 80 to be ensured up to the rear end portion of the front fender 61, thereby increasing the comfort of the driver.

Even when the plate-like steps 80 are open, the driver may place the feet on the front foot rests 83 or the rear foot rests 84. With the plate-like steps 80 being open, the driver can freely switch the foot position among the front end foot rests 80e, the front foot rests 83, and the rear foot rests 84, resulting in a higher degree of freedom for the riding posture. Inasmuch as the front foot rests 83 and the front end foot rests 80e are longitudinally contiguous to each other, the driver can switch the foot position smoothly between the front foot rests 83 and the front end foot rests 80e. Furthermore, since the plate-like steps 80 as they are open are wider in the widthwise direction of the vehicle and positioned forward of the feet, the lower faces of the plate-like steps 80 receive mud or the like splashing from the front to protect the driver from splashing mud or the like.

When the motorcycle travels on rough terrain or roads such as mountain roads, the plate-like steps 80 are closed, and the driver on the front seat 41 can extend the legs downwardly and put the feet F2 on the sub-steps 46. At this time, the driver may not be seated on the seat surface of the front seat 41, but may stand on the plate-like steps 80, or may be seated on the front seat 41 with the feet F2 placed on the sub-steps 46.

If the driver drives the motorcycle with the feet F2 placed on the sub-steps 46, then the vehicle body between the sub-steps 46 and the front seat 41 is used as grips 88 where the driver grips the vehicle body with its legs to hold the vehicle body. According to the present embodiment, the grips 88 are constructed of the step holders 45, rear portions of the below-the-seat cover 53 and intermediate side face covers 54, and front portions of the rear covers 56.

Because the sub-steps 46 are directly coupled to the pivot frames 17 by the step holders 45, the driver can directly apply its maneuvering actions to the pivot frames 17 through the sub-steps 46, making the motorcycle more maneuverable. Furthermore, as the sub-steps 46 are small in longitudinal width, the driver can angularly move its feet longitudinally on the sub-steps 46 about the sub-steps 46 used as fulcrums, resulting in a higher degree of freedom for the riding posture.

When the plate-like steps 80 are closed, they are made compact in the widthwise direction of the vehicle. Accordingly, the plate-like steps 80 are prevented from hitting obstacles such as grass, mud, or the like on rough terrain or the like, making it possible for the motorcycle to exhibit better running performance.

Generally, when the driver of an off-road motorcycle controls it to make a turn on rough terrain, the driver often extends its foot positioned in the turning direction forwardly and downwardly toward the road on the side of the front wheel for the purpose of balancing the motorcycle while the driver is being seated on the seat. Since the plate-like steps 80 of the motorcycle 1 can be kept closed, the plate-like steps 80 do not interfere with the feet that are extended forwardly. Therefore, the driver finds it easy to drive the motorcycle 1 on rough terrain.

Since the upper faces 46a of the sub-steps 46 are disposed at the same vertical positions as the faces of the bent portions 82 which are the lowest faces of the foot rest faces 81 of the main steps 48, there is no height difference when the driver switches the foot position between the sub-steps 46 and the main steps 48, making it easy for the driver to switch the foot position and making the driver feel less uncomfortable about height differences.

Moreover, as the sub-steps 46 are provided downward of the extension line 87 (FIG. 4) of the foot rest faces 81 of the main steps 48, when the driver moves its feet rearwardly along the foot rest faces 81 of the main steps 48, the driver can place the feet on the sub-steps 46 without making the feet higher in position. Therefore, the driver can easily switch the foot position from the main steps 48 to the sub-steps 46.

Since the rear-down portions 84a are provided on the rear ends of the main steps 48, the feet are less likely to be caught by the rear ends of the main steps 48 when the driver switches the foot position from the sub-steps 46 to the main steps 48. Therefore, it is easy for the driver to switch the foot position.

Furthermore, since the upper faces 46a of the sub-steps 46 are in the same vertical positions as the rear ends of the rear-down portions 84a, the feet are less likely to be caught by the rear ends of the main steps 48 when the driver switches the foot position from the sub-steps 46 to the main steps 48. Therefore, it is easy for the driver to switch the foot position.

As described above, according to the embodiment of the present invention, the motorcycle 1 includes the main steps 48 which are continuous in the longitudinal direction at positions between the bar handle 69 and the occupant seat 13 and outwardly in the widthwise direction of the vehicle, and the plate-like steps 80 which are separate from the main steps 48 at positioned forward of the main steps 48, the plate-like steps 80 being provided openably and closably such that the outer edges 80c which are positioned outwardly in the widthwise direction of the vehicle when the plate-like steps 80 are open are positioned upwardly when the plate-like steps 80 are closed. Accordingly, when the motorcycle travels on ordinary roads such as urban roads or the like, the driver can drive the motorcycle in a relaxed manner while the plate-like steps 80 at positions forward of the longitudinally continuous main steps 48 are being open and the feet are being placed on the plate-like steps 80. In addition, the plate-like steps 80 which are open can protect the feet of the driver from splashing mud or the like. Further, when the motorcycle travels on roads such as rough terrain or the like, the plate-like steps 80 are closed to reduce the width of a front portion of the vehicle body, allowing the motorcycle to travel easily on rough terrain or the like. Therefore, the motorcycle 1 can travel comfortably on a wide variety of road conditions from urban roads to rough terrain.

As the sub-steps 46 that are separate from the main steps 48 are provided at positions rearward of the main steps 48, the occupant can place its feet on the sub-steps 46 at the positions rearward of the main steps 48 depending on the situation, resulting in a higher degree of freedom for the riding posture of the occupant.

Furthermore, since the passenger steps 47 are provided at positions rearward of the sub-steps 46, even when the driver is using the sub-steps 46, the passenger can use the passenger steps 47.

Moreover, the motorcycle 1 has the front fender 61 that covers the front wheel 2 from above, and the plate-like steps 80 are inclined with the step front ends 80b being higher than the step rear ends 80a and overlapping the fender rear end portion 61a of the front fender 61 as viewed in side elevation. This allows a space used by the driver for putting its feet on the plate-like steps 80 to be ensured up to the rear end portion of the front fender 61, thereby increasing the comfort of the driver, and also allows the feet to be appropriately held on the plate-like steps 80 that are inclined to make the step front ends 80b higher. As the plate-like steps 80 are inclined, the plate-like steps 80 are made compact in terms of longitudinal length.

Inasmuch as the upper faces 46a of the sub-steps 46 are disposed at the same vertical positions as the faces of the bent portions 82 which are the lowest faces of the foot rest faces 81 of the main steps 48, it is easy for the driver to switch the foot position between the main steps 48 and the sub-steps 46.

The main steps 48 have the bent portions 82 as viewed in side elevation, the plate-like steps 80 are provided forward of the bend portions 82 along the main steps 48, and the sub-steps 46 are provided downwardly of the extension line 87 that extends rearwardly from the bent portions 82 along the foot rest faces 81 of the main steps 48. Since this allows the plate-like steps 80 to extend along the main steps 48 forward of the bent portions 82, the driver can easily move its feet from the main steps 48 to the plate-like steps 80, and the plate-like steps 80 and the main steps 48 are regarded as integrally combined together for a better design. As the sub-steps 46 are provided downward of the rearward extension line 87 of the foot rest faces 81 of the main steps 48, the driver can easily switch the foot position from the main steps 48 to the sub-steps 46.

Inasmuch as the plate-like steps 80 are joined by the hinge members 86 and provided openably and closably, the plate-like steps 80 are openable and closable by a simple structure.

The above embodiment represents an aspect of the present invention, and the present invention is not limited to the above embodiment.

In the above embodiment, the main steps 48 are illustrated as being longer than the overall length of the feet of a driver having a general body type. However, the main steps 48 are not limited to such a size, but may be shorter than the overall length of the feet of a driver having a general body type in the longitudinal direction.

In the above embodiment, the longitudinal widths of the sub-steps 46 are illustrated as being shorter than the overall length of the feet of a driver having a general body type. However, the longitudinal widths of the sub-steps 46 are not limited to such a size, but may be longer than the overall length of the feet of a driver having a general body type.

In the above embodiment, the motorcycle 1 is illustrated as a saddle-type vehicle by way of example. However, the present invention is not limited to the motorcycle, but may be applied to a saddle-type vehicle having three or more wheels, for example.

### Description of Reference Symbols

1: Motorcycle (saddle-type vehicle)
2: Front wheel
13: Occupant seat
46: Sub-step
46a: Upper face
47: Passenger step
48: Main step
61: Front fender
61a: Fender rear end portion (rear end portion of the front fender
69: Bar handle (handle)
80: Plate-like step
80a: Step rear end (rear end)
80b: Step front end (front end)
80c: Outer edge (portion positioned outwardly in the
widthwise direction of the vehicle)
81: Foot rest face
82: Bent portion
86: Hinge member (hinge)
87: Extension line

## Claims

1. A saddle-type vehicle having a main step (48) provided longitudinally continuously at a position disposed outwardly in the widthwise direction of the vehicle between a bar handle (69) and an occupant seat (13), the saddle-type vehicle comprising:
a plate-like step (80) that is separate from the main step (48) and provided at a position forward of the main step (48), the plate-like step (80) being provided openably and closably such that the plate-like step (80) has a portion (80c) that is positioned outwardly in the widthwise direction of the vehicle when the plate-like step (80) is open and that is positioned upwardly when the plate-like step (80) is closed;
**characterized in that**:
the plate-like step (80) is arranged so as to fill a space (85) i) that is concave inwardly in the widthwise direction of the saddle-type vehicle and ii) that is between i) front end portions (83a) of a front foot rest (83) of the main step (48) and ii) lower ends (51b) of a laterally bulging portion (51a) of a vehicle body cover (50) of the saddle-type vehicle.

2. The saddle-type vehicle according to claim 1, further comprising:
a sub-step (46) that is separate from the main step (48) and provided at a position rearward of the main step (48) .

3. The saddle-type vehicle according to claim 2, further comprising:
a passenger step (47) provided at a position rearward of the sub-step (46).

4. The saddle-type vehicle according to claim 2 or 3, further comprising:
a front fender (61) covering a front wheel (2) from above;
the plate-like step (80) being inclined such that a front end (80b) thereof is higher than a rear end (80a) thereof and overlaps a rear end portion (61a) of the front fender (61) as viewed in side elevation.

5. The saddle-type vehicle according to any one of claims 2 through 4, wherein the sub-step (46) has an upper face (46a) disposed at the same vertical position as a lowest face of a foot rest face (81) of the main step (48).

6. The saddle-type vehicle according to any one of claims 2 through 5, wherein the main step (48) has a bent portion (82) as viewed in side elevation;
the plate-like step (80) is provided forward of the bent portion (82) along the main step (48); and
the sub-step (46) is provided downward of an extension line (87) that extends rearwardly from the bent portion (82) along a foot rest face (81) of the main step (48) .

7. The saddle-type vehicle according to any one of claims 1 through 6, wherein the plate-like step (80) is joined by a hinge (86) and provided openably and closably.

## Patentansprüche

1. Fahrzeug vom Satteltyp, das ein Haupt-Trittblech (48) hat, das in Längsrichtung kontinuierlich an einer nach außen angeordneten Stelle in der Breitenrichtung des Fahrzeugs zwischen einer Lenkstange (69) und einem Beifahrersitz (13) angeordnet ist, wobei das Fahrzeug vom Satteltyp umfasst:
ein blechartiges Trittblech (80), das getrennt von dem Haupt-Trittblech (48) ist und das an einer Position vor dem Haupt-Trittblech (48) angeordnet ist, wobei das blechartige Trittblech (80) so vorgesehen ist, das es aufklappbar und einklappbar ist, sodass das blechartige Trittblech (80) einen Abschnitt (80c) hat, der nach außen in der Breitenrichtung des Fahrzeugs angeordnet ist, wenn das blechartige Trittblech (80) geöffnet ist und es nach oben positioniert ist, wenn das blechartige Trittblech (80) eingeklappt ist;
**dadurch gekennzeichnet, dass**
das blechartige Trittblech (80) so angeordnet ist, dass es einen Raum (85) füllt, i) der in der Breitenrichtung des Fahrzeugs vom Satteltyp nach innen gerichtet konkav ist und ii) der sich zwischen i) vorderen Endbereichen (83 a) einer vorderen Fußstütze (83) des Haupt-Trittblechs (48) und ii) unteren Enden (51b) eines seitlich sich wölbenden Bereichs (51a) einer Fahrzeugkarosserie-Abdeckung (50) des Fahrzeugs vom Satteltyp befindet.

2. Fahrzeug vom Satteltyp gemäß Anspruch 1, weiterhin umfassend:
ein Hilfs-Trittblech (46), welches getrennt von dem Haupt-Trittblech (48) ist und das an einer Position hinter dem Haupt-Trittblech (48) angeordnet ist.

3. Fahrzeug vom Satteltyp gemäß Anspruch 2, weiterhin umfassend:
ein Beifahrer-Trittblech (47), das an einer Position hinter dem Hilfs-Trittblech (46) angeordnet ist.

4. Fahrzeug vom Satteltyp gemäß Anspruch 2 oder 3, weiterhin umfassend:
einen vorderen Kotflügel (61), der ein Vorderrad (2) von oben abdeckt;
wobei das blechartige Trittblech (80) so geneigt ist, dass in einer Seitenansicht sein vorderes Ende (80b) höher ist als sein hinteres Ende (80a) und mit einem hinteren Endbereich (61a) des vorderen Kotflügels (61) überlappt.

5. Fahrzeug vom Satteltyp gemäß irgendeinem der Ansprüche 2 bis 4, wobei das Hilfs-Trittblech (46) eine obere Fläche (46a) hat, die an derselben vertikalen Position angeordnet ist wie eine unterste Fläche einer Fußrastenfläche (81) des Haupt-Trittblechs (48).

6. Fahrzeug vom Satteltyp gemäß irgendeinem der Ansprüche 2 bis 4, wobei in einer Seitenansicht das Haupt-Trittblech (48) einen gebogenen Abschnitt (82) hat;
das blechartige Trittblech (80) vor dem gebogenen Abschnitt (82) entlang des Haupt-Trittblechs (48) vorgesehen ist; und
das Hilfs-Trittblech (46) unterhalb einer Verlängerungslinie (87) vorgesehen ist, die sich von dem gebogenen Abschnitt (82) nach hinten entlang einer Fußrastenfläche (81) des Haupt-Trittblechs (48) erstreckt.

7. Fahrzeug vom Satteltyp gemäß irgendeinem der Ansprüche 1 bis 6, wobei das blechartige Trittblech (80) mittels eines Scharniers (86) verbunden ist und aufklappbar und einklappbar vorgesehen ist.

## Revendications

1. Véhicule de type à selle ayant un marchepied principal (48) prévu de manière longitudinalement continue à une position disposée vers l'extérieur dans la direction de largeur du véhicule entre un guidon (69) et un siège d'occupant (13), le véhicule de type à selle comprenant :
un marchepied en plaque (80) qui est séparé du marchepied principal (48) et prévu à une position vers l'avant du marchepied principal (48), le marchepied en plaque (80) étant prévu avec une capacité d'ouverture et de fermeture de sorte que le marchepied en plaque (80) ait une portion (80c) qui est positionnée vers l'extérieur dans la direction de largeur du véhicule lorsque le marchepied en plaque (80) est ouvert et qui est positionnée vers le haut lorsque le marchepied en plaque (80) est fermé ;
**caractérisé en ce que** :
le marchepied en plaque (80) est agencé de façon à remplir un espace (85) i) qui est concave vers l'intérieur dans la direction de largeur du véhicule de type à selle et ii) qui est entre i) des portions d'extrémité avant (83a) d'un repose-pied avant (83) du marchepied principal (48) et ii) des extrémités inférieures (51b) d'une portion en renflement latéral (51a) d'un capot de carrosserie de véhicule (50) du véhicule de type à selle.

2. Véhicule de type à selle selon la revendication 1, comprenant en outre :
un marchepied secondaire (46) qui est séparé du marchepied principal (48) et prévu à une position vers l'arrière du marchepied principal (48).

3. Véhicule de type à selle selon la revendication 2, comprenant en outre :
un marchepied de passager (47) prévu à une position vers l'arrière du marchepied secondaire (46).

4. Véhicule de type à selle selon la revendication 2 ou 3, comprenant en outre :
un garde-boue avant (61) couvrant une roue arrière (2) par le haut ;
le marchepied en plaque (80) étant incliné de sorte qu'une extrémité avant (80b) de celui-ci soit plus haute qu'une extrémité arrière (80a) de celui-ci et chevauche une portion d'extrémité arrière (61a) du garde-boue avant (61), en vue en élévation latérale.

5. Véhicule de type à selle selon l'une quelconque des revendications 2 à 4, dans lequel le marchepied secondaire (46) a une face supérieure (46a) disposée à la même position verticale qu'une face la plus basse d'une face de repose-pied (81) du marchepied principal (48).

6. Véhicule de type à selle selon l'une quelconque des revendications 2 à 5, dans lequel le marchepied principal (48) a une portion fléchie (82), en vue en élévation latérale ;
le marchepied en plaque (80) est prévu vers l'avant de la portion fléchie (82) le long du marchepied principal (48) ; et
le marchepied secondaire (46) est prévu vers le bas d'une ligne d'extension (87) qui s'étend vers l'arrière à partir de la portion fléchie (82) le long d'une face de repose-pied (81) du marchepied principal (48).

7. Véhicule de type à selle selon l'une quelconque des revendications 1 à 6, dans lequel le marchepied en plaque (80) est joint par une charnière (86) et prévu avec une capacité d'ouverture et de fermeture.
